(19) Europäisches Patentamt / European Patent Office / Office européen des brevets

(11) **EP 3 973 259 B1**

(12) **FASCICULE DE BREVET EUROPEEN**

(45) Date de publication et mention de la délivrance du brevet:
**07.06.2023 Bulletin 2023/23**

(21) Numéro de dépôt: **20726836.8**

(22) Date de dépôt: **20.05.2020**

(51) Classification Internationale des Brevets (IPC):
**G01J 3/10** *(2006.01)*      **G01N 21/3504** *(2014.01)*

(52) Classification Coopérative des Brevets (CPC):
**G01N 21/3504; G01J 3/108;** G01N 2201/06186

(86) Numéro de dépôt international:
**PCT/EP2020/064169**

(87) Numéro de publication internationale:
**WO 2020/234404 (26.11.2020 Gazette 2020/48)**

(54) **DISPOSITIF D'EMISSION ET DE CONTROLE D'UNE LUMIERE INFRA-ROUGE ET CAPTEUR DE GAZ UTILISANT UN TEL DISPOSITIF**

INFRAROTLICHT-AUSSTRAHLENDE UND -KONTROLLIERENDE VORRICHTUNG UND GASSENSOR MIT EINER SOLCHEN VORRICHTUNG

INFRARED LIGHT EMITTING AND CONTROLLING DEVICE AND GAS SENSOR USING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2019 FR 1905426**

(43) Date de publication de la demande:
**30.03.2022 Bulletin 2022/13**

(73) Titulaire: **Elichens**
**38040 Grenoble (FR)**

(72) Inventeur: **GALISULTANOV, Ayrat**
**38040 Grenoble (FR)**

(74) Mandataire: **INNOV-GROUP**
**310, avenue Berthelot**
**69372 Lyon Cedex 08 (FR)**

(56) Documents cités:
EP-A1- 3 462 149      DE-A1-102005 002 208
FR-A1- 2 866 115      US-A1- 2003 041 649

• PIERRE BARRITAULT ET AL: "Mid-IR source based on a free-standing microhotplate for autonomous COsensing in indoor applications", SENSORS AND ACTUATORS A: PHYSICAL, ELSEVIER BV, NL, vol. 172, no. 2, 21 septembre 2011 (2011-09-21), pages 379-385, XP028336715, ISSN: 0924-4247, DOI: 10.1016/J.SNA.2011.09.027 [extrait le 2011-10-10]
• XU DEHUI ET AL: "MEMS-based thermoelectric infrared sensors: A review", FRONTIERS OF MECHANICAL ENGINEERING, HIGHER EDUCATION PRESS, HEIDELBERG, vol. 12, no. 4, 14 juin 2017 (2017-06-14), pages 557-566, XP036633918, ISSN: 2095-0233, DOI: 10.1007/S11465-017-0441-2 [extrait le 2017-06-14]

**Description**

## DOMAINE TECHNIQUE

Le domaine technique de l'invention est un capteur optique de gaz, et plus particulièrement un capteur infrarouge non dispersif.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR détection", l'acronyme NDIR signifiant Non Dispersive Infra-Red. Un tel principe a été fréquemment mis en oeuvre, et est par exemple décrit dans de nombreux documents, par exemple dans US5026992 ou WO2007064370.

Selon les procédés les plus courants, le gaz analysé s'étend dans une enceinte, entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière, ou face à un réflecteur réfléchissant une partie de la lumière émise par la source de lumière. Le photodétecteur de référence est usuellement associé à un filtre optique de référence. Le filtre optique de référence définit une bande spectrale de référence, dans laquelle le gaz à analyser ne présente pas d'absorption significative. L'intérêt d'une voie de référence est de prendre en compte des fluctuations de l'intensité lumineuse émise par la source de lumière, par exemple suite au vieillissement de cette dernière. Les documents WO2016162848 ou WO2018229239 décrivent des capteurs de gaz utilisant une voie de mesure et une voie de référence.

Une contrainte liée à l'utilisation d'une voie de référence est qu'il faut disposer deux photodétecteurs différents dans l'enceinte. Cela impose parfois le recours à des réflecteurs différents, pour réfléchir l'onde lumineuse de référence vers le photodétecteur de référence, et l'onde lumineuse de mesure vers le photodétecteur de mesure.

Par ailleurs, lorsque l'onde lumineuse de référence se propage à travers le gaz à analyser, la bande spectrale de référence est définie de façon à ce que l'absorption du gaz, dans la bande spectrale de référence, soit minimale, comme précédemment indiqué. Le photodétecteur de mesure détecte l'onde lumineuse atténuée par le gaz dans une bande spectrale de mesure, correspondant à une bande spectrale d'absorption d'une espèce gazeuse d'intérêt, dont on souhaite à estimer la concentration. La bande spectrale de mesure est donc généralement différente de la bande spectrale de référence. A partir de l'intensité de l'onde lumineuse de référence, connaissant le spectre d'émission de la source de lumière, on estime alors une intensité lumineuse de référence dans la bande spectrale de mesure. Une limite de cette méthode est que la bande spectrale d'émission de la source de lumière peut évoluer avec le vieillissement de la source. Du fait de cette évolution, l'estimation de l'onde lumineuse de référence, dans la bande spectrale de mesure, peut être affectée d'une erreur.

US 2003/041649 A1 décrit un dispositif d'émission et de contrôle d'une lumière infra-rouge selon le préambule de la revendication 1.

EP 3 462 149 A1 décrit un capteur de lumière infra-rouge comportant une membrane de détection, le capteur de lumière infra-rouge formant un détecteur thermique de rayonnement, dont la membrane de détection s'étend dans une cavité, placée sous vide d'air.

L'invention, qui est définie dans la revendication 1 et qui est décrite ci-dessous, permet une simplification de la conception de capteurs de gaz

## EXPOSE DE L'INVENTION

Un premier objet de l'invention est un dispositif d'émission et de contrôle d'une lumière infra-rouge selon la revendication 1.

La source de lumière peut être formée d'une membrane suspendue au substrat et s'étendant au-dessus de la cavité.

La distance entre l'extrémité supérieure du deuxième composant et l'extrémité inférieure du premier composant est de préférence inférieure à 5 mm. L'extrémité supérieure du deuxième composant peut être disposée au contact de l'extrémité inférieure du premier composant.

De préférence :

- la source de lumière s'étend perpendiculairement à un axe transversal;
- le capteur de lumière infra-rouge s'étend perpendiculairement à l'axe transversal.

La source de lumière et le capteur de lumière infra-rouge peuvent notamment être centrés par rapport à l'axe transversal.

La source de lumière peut comporter une membrane d'émission suspendue au substrat, et s'étendant en dessus de la cavité.

Le capteur de lumière infra-rouge comporte une membrane de détection : le capteur de lumière infra-rouge peut alors être un capteur pyroélectrique ou une thermopile ou un thermistor. La membrane de détection est alors de préférence sensiblement parallèle au plan selon lequel s'étend la source de lumière.

Le dispositif peut comporter un filtre optique disposé à l'interface entre le premier composant et le deuxième composant, le filtre optique délimitant une bande spectrale de détection de la lumière se propageant vers le capteur de lumière infra-rouge.

Une couche d'air ou d'un autre gaz peut s'étendre entre le premier composant et le deuxième composant.

Un deuxième objet de l'invention est un détecteur de gaz, comportant une enceinte, apte à être occupée par un gaz à analyser, le détecteur comportant :

- une source de lumière, configurée pour émettre un rayonnement infra-rouge se propageant à travers l'enceinte ;
- un photodétecteur de mesure, agencé pour capter une lumière, émise par la source de lumière, et s'étant propagée à travers le gaz présent dans l'enceinte, en étant atténuée par ce dernier ;
- un photodétecteur de référence, agencé pour capter une lumière de référence, émise par la source de lumière, et considérée comme non atténuée par le gaz ;

le détecteur étant caractérisé en qu'il comporte un dispositif d'émission et de contrôle selon le premier objet de l'invention, de telle sorte que :

- la source de lumière du dispositif d'émission et de contrôle forme la source de lumière du détecteur de gaz ;
- le capteur de lumière infra-rouge du dispositif d'émission et de contrôle forme le photodétecteur de référence du détecteur de gaz.

Le dispositif d'émission et de contrôle et le photodétecteur de mesure sont avantageusement disposés sur un même support. Le support peut notamment délimiter l'enceinte.

Selon un mode de réalisation :

- le dispositif d'émission et de contrôle comporte un filtre optique, dit filtre optique de référence, disposé entre la source de lumière et le capteur de lumière, de façon à délimiter une bande spectrale de référence de la lumière détectée par le photodétecteur de référence;
- le photodétecteur de mesure est associé à un filtre optique de mesure, délimitant une bande spectrale de mesure.

Selon un mode de réalisation, la bande spectrale de référence et la bande spectrale de mesure sont identiques ou se recouvrent.

Lorsque le dispositif d'émission et de contrôle comporte un filtre optique, délimitant une bande spectrale de détection, La bande spectrale de référence correspond à la bande spectrale de détection.

Selon un mode de réalisation, le détecteur de gaz comporte une unité de traitement, configurée pour recevoir un signal de mesure généré par le photodétecteur de mesure et un signal de référence généré par le photodétecteur de référence. L'unité de traitement peut déterminer d'une espèce gazeuse présente dans le gaz, à partir du signal de mesure et à partir du signal de référence, l'espèce gazeuse étant apte à atténuer la lumière dans la bande spectrale de mesure. Un troisième objet de l'invention est un détecteur de gaz, comportant une enceinte, apte à être occupée par un gaz à analyser, le détecteur comportant :

- une source de lumière, configurée pour émettre un rayonnement infra-rouge se propageant à vers l'enceinte, autour d'un axe de propagation ;
- un photodétecteur de mesure, agencé pour capter une lumière, émise par la source de lumière, et s'étant propagée à travers le gaz présent dans l'enceinte, en étant atténuée par ce dernier ;
- un photodétecteur de référence, agencé pour capter une lumière de référence, émise par la source de lumière, et considérée comme non atténuée par le gaz ;

le détecteur étant caractérisé en que la source de lumière est disposée entre l'enceinte, ou l'intérieur de l'enceinte, et le photodétecteur de référence, de telle sorte qu'une première partie de la lumière émise par la source de lumière se propage vers l'intérieur de l'enceinte, selon l'axe de propagation, tandis qu'une deuxième partie de la lumière se propage de la source de lumière vers le photodétecteur de référence, dans un sens opposé à la première partie de la lumière.

Le détecteur de gaz peut présenter les caractéristiques décrites en lien avec le deuxième objet de l'invention.

## FIGURES

La figure 1A décrit trois composants destinés à être assemblés pour former un dispositif selon l'invention.

La figure 1B représente un détail de la figure 1A.

La figure 1C représente un dispositif selon l'invention.

La figure 1D représente un détail de la figure 1C. Il en est de même de la figure 1E.

La figure 2 schématise un détecteur de gaz comportant un dispositif d'émission et de contrôle tel que décrit en lien avec les figures 1A à 1E.

Les figures 3A, 3B, 3C et 3D schématisent des modes de réalisation de l'invention.

La figure 4A montre la forme d'impulsions alimentant la source de lumière du dispositif durant des essais expérimentaux.

La figure 4B montre les signaux détectés par le capteur de lumière du dispositif pour différentes tensions d'alimentation de la source de lumière.

## EXPOSE DE MODES DE REALISATION PARTICULIERS

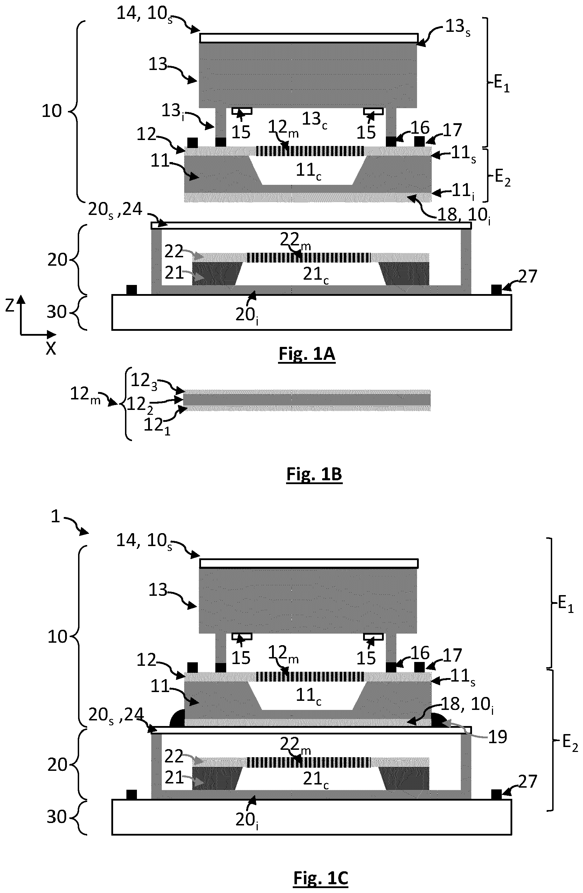

La figure 1A montre trois composants 10, 20, 30 dont l'assemblage conduit à l'obtention d'un dispositif d'émission et de contrôle 1 selon l'invention. Il s'agit de composants connus de l'homme du métier. Le composant 30 est optionnel.

Un premier composant 10 permet l'émission d'une lumière infra-rouge. Le premier composant comporte un premier substrat 11, dans lequel une cavité $11_c$ est ménagée. Le premier substrat s'étend entre une surface inférieure $11_i$ et une partie supérieure $11_s$. Une couche mince 12 est déposée sur la partie supérieure $11_s$. La couche mince forme une membrane $12_m$ suspendue en dessus de la cavité $11_c$. Ainsi, le substrat forme un support de la membrane $12_m$.

La membrane $12_m$ est parcourue par une piste conductrice, par exemple métallique. Lorsqu'elle est parcourue par un courant électrique, la piste conductrice s'échauffe, ce qui entraîne un échauffement de la membrane $12_m$. La température de la membrane peut alors être comprise entre 400°C et 800°C. Sous l'effet de l'échauffement, la membrane émet un rayonnement infra-rouge. Ainsi, la membrane $12_m$, dite membrane d'émission, est configurée pour émettre une lumière infra-rouge. La membrane d'émission $12_m$ forme alors une source de lumière. La bande spectrale d'émission de la lumière est typiquement comprise entre 1 $\mu m$ et 20 $\mu m$. Il est généralement considéré que le spectre d'émission de la lumière émise suit le spectre d'un corps noir.

La membrane d'émission $12_m$ est par exemple constituée d'un assemblage de trois couches, comme représenté sur la figure 1B :

- une première couche $12_1$ de $Si_3N_4$ (SiN) d'épaisseur 100 nm;
- une deuxième couche $12_2$ de $SiO_2$ d'épaisseur 100 nm ;
- une troisième couche $12_3$ de SiN d'épaisseur 100 nm.

Entre la première couche $12_1$ et la deuxième couche $12_2$ s'étend la piste conductrice, par exemple en or ou en platine. La piste conductrice n'est pas représentée sur la figure 1B.

Parallèlement au plan du substrat 11, la membrane d'émission s'étend selon un diamètre de préférence compris entre 100 $\mu m$ et 1 mm, ou entre 100 $\mu m$ et 500 $\mu m$. Le substrat 11 peut comporter un ou une pluralité de matériaux semi-conducteurs. Il peut s'agir d'un substrat Si ou d'un substrat de type Silicon on Insulator (Silicium sur Isolant).

Une telle membrane a déjà été décrite, par exemple dans EP2846201 ou dans le document Lefebvre A. "Simulation et conception de microsources infrarouges nanophotoniques pour la détection de gaz", thèse de doctorat de l'université Paris Saclay, présentée le 16 décembre 2015. Elle forme une source de lumière ponctuelle.

Un capot 13 est disposé sur le substrat 11. Le capot 13 délimite une chambre $13_c$, autour de la membrane d'émission $12_m$. Dans l'exemple représenté sur la figure 1A, le capot 13 présente une partie inférieure $13_i$ formant un cadre. Le cadre peut être fixé sur un cadre de liaison 16 formé sur la couche mince 12. Le cadre de liaison 16 est par exemple en or. Le cadre de liaison favorise une liaison étanche entre le substrat 11 et le capot 13.

Le dispositif peut comporter un matériau de getter 15, disposé dans la chambre $13_c$ délimitée par le capot 13. Le matériau de getter est apte à pomper des molécules gazeuses résiduelles dans la chambre $13_c$. Le matériau de getter est connu de l'homme du métier. Il s'agit d'un matériau présentant des propriétés de chimisorption, permettant un piégeage chimique de molécules de gaz. Le matériau getter est apte à réaliser un pompage gazeux par absorption ou adsorption. Il peut par exemple s'agir de Titane, Zr, Vanadium, Chrome, Cobalt, Fe, Mn, Pd Ba, Al et leurs alliages. L'épaisseur du matériau de getter est par exemple comprise entre 10 nm à quelques $\mu m$, par exemple 50 nm - 2 $\mu m$.

Le capot 13 s'étend entre la partie inférieure $13_i$ précédemment décrite, et une partie supérieure $13_s$, de préférence plane. De façon avantageuse, une couche antireflet 14 est disposée sur la partie supérieure $13_s$ du capot 13.

Une couche antireflet 18 peut également être disposée contre la surface inférieure $11_i$ du substrat 11.

Le substrat 11 et le capot 13, assemblés l'un à l'autre, forment le premier composant 10, renfermant la membrane d'émission $12_m$. La membrane d'émission $12_m$ sépare deux demi-espaces :

- un premier demi-espace $E_1$ délimité par la membrane $12_m$, ou plus précisément selon un plan selon lequel s'étend la membrane $12_m$, et comportant le capot 13;
- un deuxième demi-espace $E_2$, délimité par la membrane $12_m$, ou plus précisément selon le plan selon lequel s'étend la membrane $12_m$, et comportant le substrat 11.

Le premier composant 10 s'étend ainsi entre une extrémité inférieure $10_i$, qui correspond ici à la surface inférieure $11_i$ du substrat 11 ou à l'éventuelle couche antireflet 18, et une extrémité supérieure $10_s$, qui correspond ici à la partie supérieure du capot $13_s$ ou à l'éventuelle couche antireflet 14.

La lumière infra-rouge émise par la membrane d'émission est émise selon un angle solide de $4\pi$ stéradians. De ce fait, la lumière émise se propage à la fois à travers le premier demi-espace $E_1$ et le deuxième demi-espace $E_2$.

Le premier composant 10 comporte également des plots de connexion 17, destinés à effectuer une interconnexion électrique avec une carte électronique 30 décrite ci-après.

Le dispositif comporte un deuxième composant 20. Le deuxième composant 20 comporte un capteur de lumière infra-rouge, par exemple une thermopile ou un capteur pyroélectrique. Dans l'exemple représenté sur les figures 1A à 1E, le capteur de lumière infra-rouge est une thermopile. Le deuxième composant 20 comporte une couche de détection 22, formant le capteur de lumière infra-rouge, dont une partie centrale est formée par une membrane de détection $22_m$. La membrane de détection $22_m$ est par exemple une partie active d'une thermopile. Sous l'effet d'une exposition à un rayonnement infrarouge, une variation de température apparaît au sein de la thermopile. Suite à cette variation de température, une différence de potentiel apparaît entre les bornes de la thermopile. Dans l'exemple représenté, le deuxième composant est une thermopile Heimann HCS C2y.

La membrane de détection $22_m$ est suspendue en dessus d'une cavité $21_c$ pratiquée dans un support 21. La membrane de détection $22_m$ et le support 21 sont disposés à l'intérieur du deuxième composant. Ce dernier s'étend entre une extrémité inférieure $20_i$ et une extrémité supérieure $20_s$. Un filtre optique 24, définissant une bande spectrale de détection, peut avantageusement être disposé au niveau de l'extrémité supérieure $20_s$. Dans l'exemple représenté, le filtre optique forme l'extrémité supérieure $20_s$ du deuxième composant 20.

Le deuxième composant 20 est de préférence relié, au niveau de son extrémité inférieure $20_i$, à une carte électronique 30, par exemple une carte PCB 30 (Printed Circuit Board), sur laquelle s'étend un circuit imprimé. Le circuit imprimé permet l'alimentation électrique du premier composant 10, et du deuxième composant 20, ainsi qu'un pilotage de ces derniers et une acquisition du signal émis par le deuxième composant 20, représentatif de la lumière détectée par le capteur de lumière $22_m$.

Un aspect important de l'invention est que le premier composant 10 est assemblé au deuxième composant 20. Plus précisément, l'extrémité inférieure $10_i$ du premier composant 10 et rapprochée de l'extrémité supérieure $20_s$ du deuxième composant 20. Dans l'exemple représenté, une colle 19 est disposée autour de l'extrémité inférieure $10_i$ du premier composant 10, de façon à effectuer une liaison avec l'extrémité supérieure $20_s$ du deuxième composant. Cela permet un assemblage rigide du premier composant 10 et du deuxième composant 20. Il n'est pas nécessaire que le premier composant soit accolé au deuxième composant. Un espace libre d'épaisseur préférentiellement inférieure à 5 mm ou à 1 mm peut être ménagé entre le premier composant 10 et le deuxième composant 20, de façon à améliorer l'isolation thermique du deuxième composant 20 par rapport au premier composant 10, comme décrit dans la suite de la description.

L'assemblage permet l'obtention d'un dispositif 1 monolithique tel que représenté sur la figure 1C. Le dispositif est apte à émettre une lumière, par le premier composant 10, et plus précisément par la source de lumière formée par la membrane d'émission $12_m$. Une partie de la lumière émise se propage dans le premier demi-espace $E_1$, à travers le capot 13 et la couche antireflet 14. Une autre partie de lumière émise se propage également dans le demi-espace $E_2$, avant d'être collectée par le capteur de lumière formé par la membrane de détection $22_m$ du deuxième composant 20.

Ainsi, le capteur de lumière, formé par le deuxième composant 20, est apte à émettre un signal dont l'intensité dépend de la quantité de lumière émise par la source de lumière. Un tel capteur peut être utilisé pour contrôler la puissance lumineuse de la lumière rayonnée par la source de lumière.

Des contacts électriques 27 sont disposés sur la carte électronique 30. Ils sont destinés à être connectés aux plots de connexion électriques 17 disposés sur le premier substrat 11, de façon à alimenter la source de lumière $12_m$.

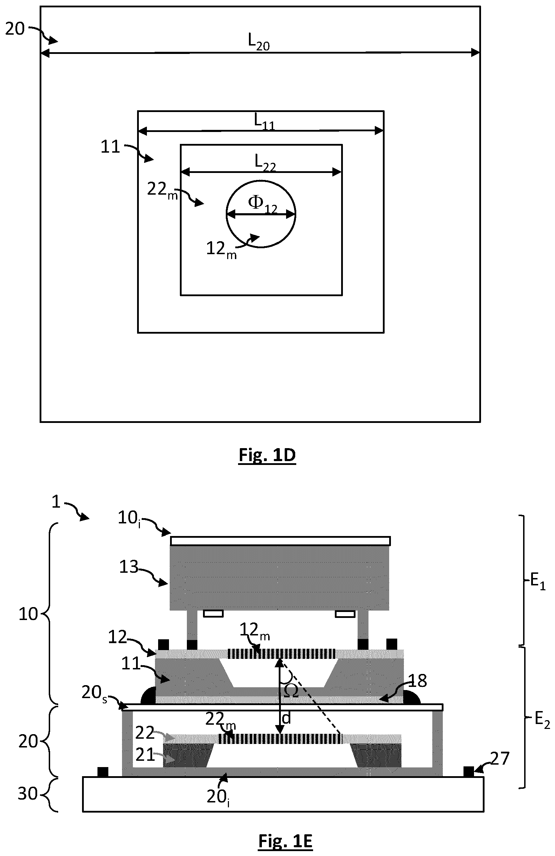

De préférence, l'assemblage est réalisé de telle sorte que la membrane d'émission $12_m$ s'étende parallèlement ou sensiblement parallèlement à la membrane de détection $22_m$. Par sensiblement parallèlement, il est entendu parallèle en prenant en compte une tolérance angulaire de quelques degrés, par exemple de $\pm$ 0.5° ou $\pm$ 1° voire $\pm$ 5°. De préférence, la membrane d'émission $12_m$ est centrée par rapport à la membrane de détection $22_m$, selon un axe transversal Z perpendiculaire à la membrane d'émission et/ou à la membrane de détection. Un tel centrage est schématisé sur la figure 1D, perpendiculairement à l'axe Z. Dans l'exemple représenté, la partie active de la membrane d'émission $12_m$ s'étend selon un diamètre $\Phi_{12}$ de 0.3 mm tandis que la partie active de la membrane de détection $22_m$ est un carré de côté $L_{22}$ égal à 1.2 mm.

Sur la figure 1D, on a également représenté les encombrements respectifs du premier substrat 11 ($L_{11}$ = 1.2 mm) et du deuxième composant 20 (carré de côté $L_{20}$ = 3.8 mm)

La distance d entre la membrane d'émission $12_m$ et la membrane de détection $22_m$, parallèlement à l'axe transversal Z est, dans cet exemple, égale à 1.55 mm. D'une façon plus générale, cette distance peut être comprise entre 500 $\mu$m et 3 ou 5 mm. Plus la distance d est courte, plus l'angle solide sous lequel la membrane de détection $22_m$ voit la membrane d'émission $12_m$ est important, comme on peut le voir sur la figure 1E. De préférence, le demi-angle $\Omega$ du cône s'étendant entre le centre de la membrane d'émission $12_m$ et la périphérie de la membrane de détection $22_m$ est supérieur ou égal à 6° et encore de préférence supérieur ou égal à 20°.

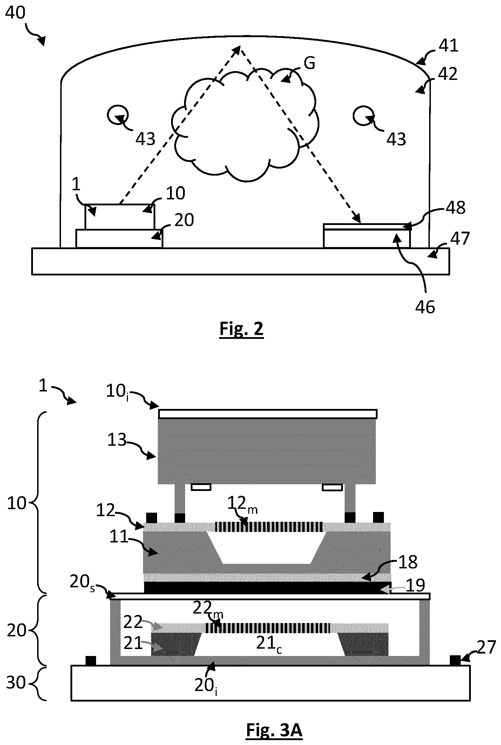

La figure 2 montre un détecteur de gaz 40 mettant en oeuvre un dispositif d'émission tel que décrit en lien avec les figures 1A à 1E. Comme mentionné en lien avec l'art antérieur, le détecteur de gaz comporte une paroi périphérique 41, délimitant une enceinte 42. La paroi périphérique 41, comporte des ouvertures 43 à travers lesquelles un gaz G à analyser peut être admis ou évacué de l'enceinte 42. Dans l'exemple représenté, la paroi périphérique 41 forme un capot, assemblé à une carte électronique 47. La carte électronique 47 est par exemple une carte de type PCB. A l'intérieur de l'enceinte 42, la paroi périphérique est réfléchissante dans une bande spectrale comprise entre 1 $\mu$m et 20 $\mu$m.

Le détecteur 40 comporte un dispositif d'émission et de contrôle 1, tel que précédemment décrit, formé du premier composant 10 superposé au deuxième composant 20. Sous l'effet d'une alimentation électrique, parvenant au dispositif d'émission 1 par la carte 47, une lumière est émise par le premier composant 10, et plus précisément par la membrane d'émission $12_m$ confinée dans le premier composant 10. Une partie de la lumière émise se propage à travers l'enceinte 42, à travers le gaz à analyser. Durant sa propagation à travers l'enceinte 42, la lumière émise subit une atténuation. Le détecteur 40 comporte un photodétecteur 46, dit photodétecteur de mesure, configuré pour déterminer une intensité $I$ de la lumière émise par le dispositif 1 et atténuée par le gaz. De préférence, le photodétecteur de mesure 46 est couplé à un filtre optique 48 définissant une bande spectrale de mesure $\Delta\lambda_m$. La bande spectrale de mesure $\Delta\lambda_m$ peut notamment être définie en fonction d'une bande spectrale d'absorption d'une espèce gazeuse prédéterminée, dont on souhaite mesurer une concentration dans le gaz G. Ainsi, dans la bande spectrale de mesure $\Delta\lambda_m$, l'espèce gazeuse, dont on souhaite déterminer la concentration, présente une atténuation de la lumière considérée comme significative.

Le deuxième composant 20 permet une détection d'une partie de la lumière émise par le dispositif d'émission 1, la lumière détectée se propageant du premier composant 10 vers le deuxième composant 20. Le deuxième composant 20 du dispositif 1 forme un photodétecteur de référence du détecteur de gaz 40. Il permet une détection d'une intensité de référence $I_{ref}$, émise par la source de lumière, et n'étant pas atténuée par le gaz à analyser, du fait qu'elle ne se propage pas à travers l'enceinte 42. Le photodétecteur de référence détecte l'intensité de référence dans une bande spectrale de référence $\Delta\lambda_{ref}$.

Le détecteur de gaz comporte une unité de traitement 43, pouvant être disposée sur la carte 47, et recevant l'intensité de mesure $I$ mesurée par le photodétecteur de mesure 46 et l'intensité de référence mesurée par le dispositif 1, et plus précisément par le deuxième composant 20 utilisé en tant que photodétecteur de référence.

A partir de l'intensité de référence $I_{ref}$, il est possible d'estimer l'intensité $I_0$ qui aurait atteint le capteur de mesure 46, dans la bande spectrale de mesure $\Delta\lambda_m$, en l'absence de gaz dans l'enceinte. L'unité de traitement peut déterminer une atténuation $att$ du gaz dans la bande spectrale de mesure $\Delta\lambda_m$, selon la loi de Beer-Lambert :

$$att = -ln\left(\frac{I}{I_0}\right) \quad (1)$$

A partir de l'atténuation $att$, la concentration c d'espèce gazeuse recherchée est obtenue, selon l'expression :

$$att = -\mu(c)l \quad (2)$$

- $\mu(c)$ est un coefficient atténuation, dépendant de la quantité c recherchée;
- $l$ est l'épaisseur de gaz traversé par la lumière détectée dans l'enceinte.

Contrairement aux dispositifs décrits dans l'art antérieur, le détecteur de gaz 40 ne dispose pas d'une voie de mesure de référence détectant une lumière s'étant propagée à travers le gaz à mesurer, à l'intérieur de l'enceinte. Le photodétecteur de référence correspond au capteur de lumière formé par le deuxième composant 20 du dispositif d'émission et de contrôle 1. De ce fait, il n'est pas nécessaire d'agencer des parois réfléchissantes dans l'enceinte, pour réfléchir spécifiquement la lumière émise par la source de lumière vers un photodétecteur de référence.

De préférence, le filtre optique 24, équipant le dispositif d'émission et de contrôle 1, définit la même bande spectrale que la bande spectrale de mesure $\Delta\lambda_m$ du filtre 48. Ainsi, le détecteur de gaz est tel que la bande spectrale de mesure $\Delta\lambda_m$ du photodétecteur de mesure peut être identique à la bande spectrale de référence $\Delta\lambda_{ref}$ du photodétecteur de référence, cette dernière correspondant à la bande spectrale de détection du filtre 24. Cela permet d'éviter l'effet d'une éventuelle déformation du spectre d'émission de la source de lumière au cours du vieillissement, la déformation induisant une variation relative de l'intensité émise par la source de lumière dans la bande spectrale de référence et dans la bande spectrale de mesure. En effet, la bande spectrale de référence étant confondue à la bande spectrale de mesure, le détecteur de gaz est insensible à une variation spectrale de la source de lumière. La bande spectrale de mesure $\Delta\lambda_m$ et la bande spectrale de référence $\Delta\lambda_{ref}$ peuvent également se recouvrir partiellement. Elles peuvent également être totalement séparées l'une de l'autre.

Un autre avantage de cette configuration est la facilité de réalisation du dispositif 1, ce dernier étant obtenu à partir d'un simple assemblage entre le premier composant 10 et le deuxième composant 20.

Un autre avantage de cette configuration est liée à la proximité de la source de lumière $12_m$ et du capteur de lumière infra-rouge $22_m$ : Cela permet d'obtenir une quantité élevée de signal détecté par le capteur de lumière infra-rouge

De façon plus générale, l'invention concerne un détecteur de gaz, comportant une enceinte, une source de lumière et un photodétecteur de mesure, ce dernier étant configuré pour détecter une lumière s'étant propagée à travers le gaz à analyser, présent dans l'enceinte. La source de lumière est configurée pour émettre une première partie de la lumière, autour d'un axe d'émission, vers l'intérieur de l'enceinte. La source de lumière est associée à un photodétecteur de référence, de telle sorte que la source de lumière est disposée entre l'enceinte et le photodétecteur de référence. Une deuxième partie de la lumière se propage alors vers le photodétecteur de référence, autour de l'axe d'émission, mais selon un sens opposé au sens de propagation de la première partie de la lumière. La deuxième partie de la lumière atteint alors le photodétecteur de référence sans s'être propagée à travers l'enceinte. La source de lumière et le photodétecteur de référence peuvent présenter des caractéristiques telles que celles précédemment décrites. En outre, le recours à d'autres superpositions source de lumière / photodétecteur sont envisageables, dès lors que le photodétecteur de référence est superposée à la source de lumière, et qu'il est apte à détecter une partie de la lumière émise par cette dernière, l'autre partie se propageant de la source de lumière vers l'enceinte comportant le gaz à analyser.

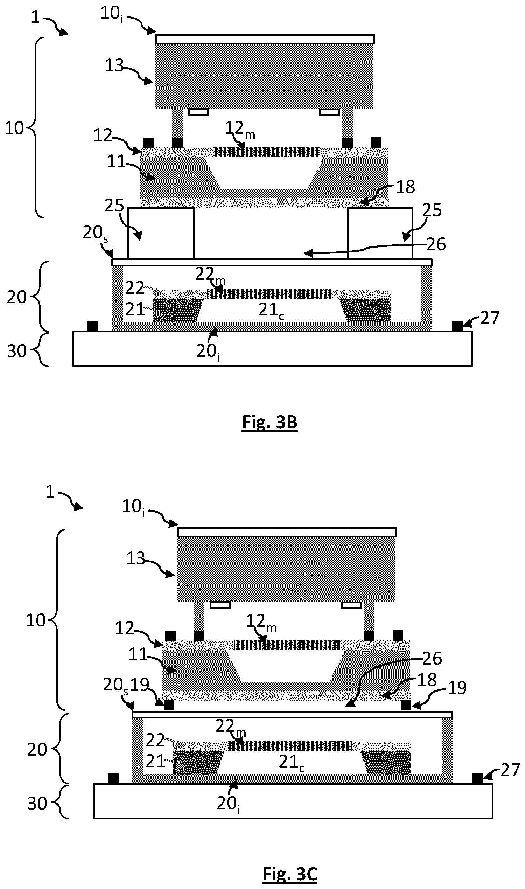

Les figures 3A et 3B montrent d'autres modes de réalisation de l'invention. Sur la figure 3A, le premier composant 10 est relié au deuxième composant 20 par une fine épaisseur de colle 19 s'étendant entre l'extrémité inférieure $10_i$ du premier composant 10 et l'extrémité supérieure $20_s$ du deuxième composant 20.

Comme précédemment évoqué, il peut être préférable de ménager un espace libre entre le premier composant 10 et le deuxième composant 20, de façon à renforcer l'isolation thermique du deuxième composant 20 par rapport au premier composant 10. L'espace libre est destiné à être rempli d'air ou de gaz, par exemple du gaz à analyser. En effet, lors de son utilisation, la source de lumière, formée par l'échauffement de la membrane d'émission $12_m$, chauffe. La chambre $11_c$, s'étendant autour de la membrane d'émission $12_m$, est généralement maintenue sous vide d'air. Cependant, une partie de la chaleur diffuse à travers le premier composant 10, vers le deuxième composant 20. Une partie de la chaleur ayant diffusé au niveau du premier composant 10 peut alors être transmise à la membrane de détection $22_m$. Or, il faut éviter que la membrane de détection $22_m$ soit soumise à un échauffement parasite autre que celui correspondant au rayonnement infra-rouge émis par la source de lumière. En effet, un échauffement parasite forme une composante parasite du signal de détection, se superposant à une composante utile, correspondant au rayonnement infra-rouge détecté. Il est alors nécessaire d'extraire la composante utile du signal issu du capteur de lumière, ce qui peut être fastidieux.

Une couche 26 d'isolant thermique, par exemple une couche d'air, ou d'un autre gaz, voire de vide, peut donc être ménagée, entre le premier composant 10 et le deuxième composant 20, afin limiter l'échauffement du deuxième composant 20 par le premier composant 10.

Sur le mode de réalisation représenté sur la figure 3B, un élément intercalaire d'isolation thermique 25 est interposé entre le premier composant 10 et le deuxième composant 20. L'élément intercalaire d'isolation thermique forme une structure, comportant de préférence un matériau isolant thermiquement. L'élément intercalaire d'isolation thermique permet de délimiter une couche d'air 26 (ou d'un autre gaz, ou de vide) entre le premier composant 10 et le deuxième composant 20.

Quel que soit le mode de réalisation, de façon à limiter l'échauffement parasite de la membrane $22_m$ par conduction thermique, la cavité $21_c$ ménagée dans le deuxième composant 20 peut être mise sous vide, et comporter un matériau de getter, tel que décrit en lien avec la figure 1A. Le deuxième composant 20 peut par exemple comporter un détecteur thermique de rayonnement, par exemple un capteur pyroélectrique ou une thermopile ou un thermistor.

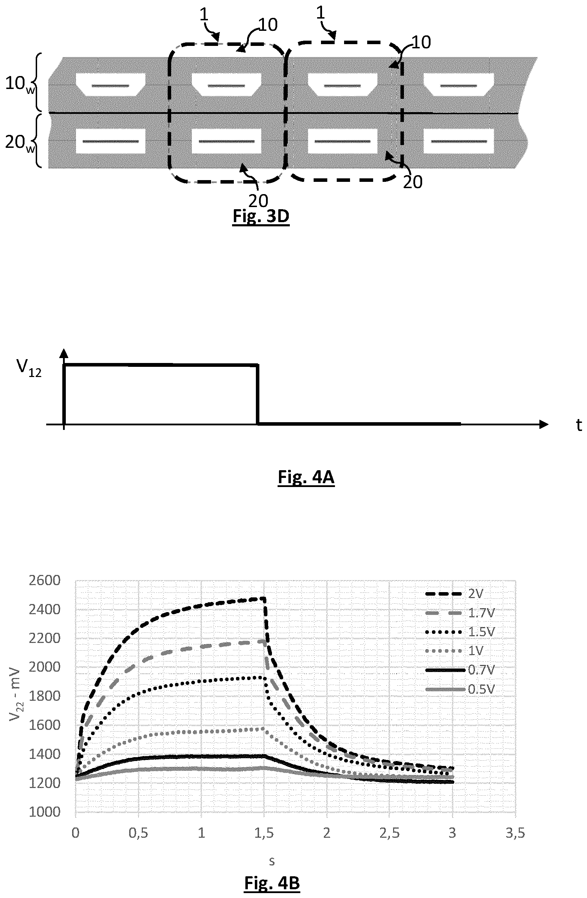

Un autre exemple est donné sur la figure 3C, le premier composant 10 étant scellé sur le deuxième composant 20, par exemple par de la colle 19 ou par scellement direct. Un tel dispositif peut être obtenu par assemblage wafer-wafer (ou wafer level packaging), tel qu'illustré sur la figure 3D. La figure 3D montre un exemple selon lequel on dispose d'une première plaque $10_w$, ou premier wafer, dans laquelle plusieurs premiers composants 10 sont réalisés. On dispose d'une deuxième plaque $20_w$, ou deuxième wafer, dans laquelle plusieurs deuxièmes composants 20 sont réalisés. L'assemblage de la première plaque $10_w$ sur la deuxième plaque $20_s$ permet d'obtenir une pluralité de dispositifs 1. Ces derniers sont séparés les uns des autres suite à l'assemblage des deux plaques.

La configuration décrite en lien avec les figures 1A à 1E a été testée. On a soumis la piste conductrice formée dans la membrane d'émission $12_m$ à une différence de potentiel $V_{12}$, formant des impulsions en forme de créneau d'une durée égale à 1.5 s.

La figure 4A schématise la forme des impulsions alimentant la membrane d'émission $12_m$. On a ensuite mesuré une tension $V_{22}$ d'un signal de détection généré aux bornes de la carte électronique 30, représentatif d'une quantité de lumière détectée par la membrane de détection $22_m$. La tension mesurée forme une réponse du deuxième composant 20 à l'illumination provenant du premier composant 10. La figure 4B montre différentes réponses mesurées pour différentes valeurs de la différence de potentiel $V_{12}$. Sur la figure 4B, l'axe des ordonnées correspond à une tension $V_{22}$ mesurée, tandis que l'axe des abscisses représente le temps.

L'invention pourra être mise en oeuvre sur des capteurs de gaz à usage industriel, domestique, ou pour des applications liées au contrôle de la pollution atmosphérique.

## Revendications

1. Dispositif (1) d'émission et de contrôle d'une lumière infra-rouge, comportant :

   - un substrat (11), s'étendant entre une surface inférieure ($11_i$) et une surface supérieure ($11_s$), une cavité ($11_c$) étant ménagée dans le substrat, la cavité débouchant au niveau de la surface supérieure ;
   - une source de lumière ($12_m$) s'étendant sur la cavité ($11_c$), apte à s'échauffer lorsqu'elle est parcourue par un courant électrique, de façon à émettre une lumière infra-rouge ;
   - un capot (13), recouvrant le substrat, le capot et le substrat formant un premier composant (10) renfermant la source de lumière ($12_m$), le premier composant s'étendant entre une extrémité inférieure ($10_i$) et une extrémité supérieure ($10_s$) ;
   - la source de lumière ($12_m$) s'étendant selon un plan délimitant un premier demi-espace ($E_1$), comportant le capot et l'extrémité supérieure ($10_s$) du premier composant ainsi qu'un deuxième demi-espace ($E_2$), comportant la cavité ($11_c$) et l'extrémité inférieure ($10_i$) du premier composant ;
   le dispositif étant tel qu'il comporte :

      - un capteur de lumière infra-rouge ($22_m$) confiné dans un deuxième composant (20), le deuxième composant s'étendant entre une extrémité inférieure ($20_i$) et une extrémité supérieure ($20_s$) ;

   le dispositif étant tel que :

   - le deuxième composant (20) est solidaire du premier composant (10) ;
   - l'extrémité supérieure ($20_s$) du deuxième composant (20) est disposée face à l'extrémité inférieure ($10_i$) du premier composant (10) ;

   de telle sorte que la source de lumière ($12_m$) est agencée pour émettre une première partie de la lumière dans le premier demi-espace ($E_1$), à travers le capot, et une deuxième partie de la lumière dans le deuxième espace ($E_2$), à travers le substrat (11), vers le capteur de lumière infra-rouge ($22_m$), ce dernier étant apte à contrôler une intensité de la lumière émise par la source de lumière;
   le dispositif étant **caractérisé en ce que**.

   - le capteur de lumière infra-rouge comporte une membrane de détection ($22_m$), le capteur de lumière infra-rouge formant un détecteur thermique de rayonnement ;
   - la membrane de détection s'étend dans une cavité ($21_c$), placée sous vide d'air, et ménagée dans le deuxième composant.

2. Dispositif selon la revendication 1, dans lequel la source de lumière ($12_m$) est une membrane suspendue au substrat (11), et s'étendant en dessus de la cavité ($11_c$).

3. Dispositif selon l'une quelconque des revendications 1 ou 2, dans lequel la distance entre l'extrémité supérieure ($20_s$) du deuxième composant (20) et l'extrémité inférieure ($10_i$) du premier composant (10) est inférieure à 5 mm.

4. Dispositif selon l'une quelconque des revendications précédentes, dans lequel :

   - la source de lumière ($12_m$) s'étend perpendiculairement à un axe transversal (Z);
   - le capteur de lumière infra-rouge ($22_m$) s'étend perpendiculairement à l'axe transversal.

5. Dispositif selon la revendication 4, dans lequel la source de lumière et le capteur de lumière infra-rouge sont centrés par rapport à l'axe transversal.

6. Dispositif selon l'une quelconque des revendications précédentes, dans lequel la membrane de détection est parallèle ou sensiblement parallèle au plan selon lequel s'étend la source de lumière.

7. Dispositif selon l'une quelconque des revendications précédentes, comportant un filtre optique (24) disposé à l'interface entre le premier composant (10) et le deuxième composant (20), le filtre optique délimitant une bande spectrale de détection de la lumière se propageant vers le capteur de lumière infrarouge.

8. Dispositif selon l'une quelconque des revendications précédentes, dans lequel une couche d'air ou d'un autre gaz (26) s'étend entre le premier composant (10) et le deuxième composant (20).

9. Détecteur de gaz (40), comportant une enceinte (42), apte à être occupée par un gaz à analyser, le capteur comportant :

- une source de lumière, configurée pour émettre un rayonnement infra-rouge se propageant à travers l'enceinte ;
- un photodétecteur de mesure (46), agencé pour capter une lumière, émise par la source de lumière, et s'étant propagée à travers le gaz présent dans l'enceinte, en étant atténuée par ce dernier ;
- un photodétecteur de référence, agencé pour capter une lumière de référence, émise par la source de lumière, et considérée comme non atténuée par le gaz ;
- le détecteur étant caractérisé en qu'il comporte un dispositif d'émission et de contrôle (1) selon l'une quelconque des revendications précédentes, de telle sorte que :
- la source de lumière ($12_m$) du dispositif d'émission et de contrôle (1) forme la source de lumière du détecteur de gaz ;
- le capteur de lumière infra-rouge ($22_m$) du dispositif d'émission et de contrôle (1) forme le photodétecteur de référence du détecteur de gaz.

10. Détecteur de gaz selon la revendication 9, dans lequel le dispositif d'émission et de contrôle et le photodétecteur de mesure sont disposés sur un même support (47).

11. Détecteur de gaz selon la revendication 10, dans lequel le support (47) délimite l'enceinte (42).

12. Détecteur de gaz selon l'une quelconque des revendications 9 à 11, dans lequel :

- le dispositif d'émission et de contrôle (1) comporte un filtre optique, dit filtre optique de référence (24), disposé entre la source de lumière et le capteur de lumière infra-rouge, de façon à délimiter une bande spectrale de référence ($\Delta\lambda_{ref}$) de la lumière détectée par le photodétecteur de référence;
- le photodétecteur de mesure est associé à un filtre optique de mesure, délimitant une bande spectrale de mesure ($\Delta\lambda_m$).

13. Détecteur de gaz selon l'une quelconque des revendications 9 à 12, comportant une unité de traitement (43), configurée pour recevoir un signal de mesure généré par le photodétecteur de mesure et un signal de référence généré par le photodétecteur de référence, et pour déterminer une quantité d'une espèce gazeuse présente dans le gaz, à partir du signal de mesure et à partir du signal de référence, l'espèce gazeuse étant apte à atténuer la lumière dans la bande spectrale de mesure.

14. Détecteur de gaz selon l'une quelconque des revendications 12 à 13, dans lequel la bande spectrale de référence et la bande spectrale de mesure sont identiques ou se recouvrent.

**Patentansprüche**

1. Vorrichtung (1) zur Aussendung und Kontrolle eines Infrarotlichts, umfassend:

- ein Substrat (11), das sich zwischen einer unteren Fläche ($11_i$) und einer oberen Fläche ($11_s$) erstreckt, wobei ein Hohlraum ($11_c$) in dem Substrat ausgebildet ist, wobei der Hohlraum auf Höhe der oberen Fläche mündet;
- eine sich über dem Hohlraum ($11_c$) erstreckende Lichtquelle ($12_m$), die geeignet ist, sich zu erwärmen, wenn sie von einem elektrischen Strom durchflossen wird, so dass sie ein Infrarotlicht aussendet;
- eine Kappe (13), die das Substrat bedeckt, wobei die Kappe und das Substrat eine erste Komponente (10) bilden, die die Lichtquelle ($12_m$) enthält, wobei sich die erste Komponente zwischen einem unteren Ende ($10_i$) und einem oberen Ende ($10_s$) erstreckt;
- wobei sich die Lichtquelle ($12_m$) entlang einer Ebene erstreckt, die einen ersten Halbraum ($E_1$) begrenzt, der die Kappe und das obere Ende ($10_s$) der ersten Komponente umfasst, sowie einen zweiten Halbraum ($E_2$), der den Hohlraum ($11_c$) und das untere Ende ($10_i$) der ersten Komponente umfasst;
wobei die Vorrichtung dergestalt ist, dass sie umfasst:

- einen Infrarotlichtsensor ($22_m$), der in einer zweiten Komponente (20) eingeschlossen ist, wobei sich die zweite Komponente zwischen einem unteren Ende ($20_i$) und einem oberen Ende ($20_s$) erstreckt;

wobei die Vorrichtung dergestalt ist, dass:

- die zweite Komponente (20) fest mit der ersten Komponente (10) verbunden ist;

- das obere Ende ($20_s$) der zweiten Komponente (20) gegenüber dem unteren Ende ($10_i$) der ersten Komponente (10) angeordnet ist;

so dass die Lichtquelle ($12_m$) dazu eingerichtet ist, einen ersten Teil des Lichts in den ersten Halbraum ($E_1$), durch die Kappe hindurch, und einen zweiten Teil des Lichts in den zweiten Halbraum ($E_2$), durch das Substrat (11) hindurch, zum Infrarotlichtsensor ($22_m$) hin auszusenden, wobei Letzterer geeignet ist, eine Intensität des von der Lichtquelle ausgesendeten Lichts zu kontrollieren;

wobei die Vorrichtung **dadurch gekennzeichnet ist, dass**:

- der Infrarotlichtsensor eine Detektionsmembran ($22_m$) umfasst, wobei der Infrarotlichtsensor einen thermischen Strahlungsdetektor bildet;
- die Detektionsmembran sich in einem Hohlraum ($21_c$) erstreckt, der unter Vakuum gesetzt ist und in der zweiten Komponente ausgebildet ist.

2.  Vorrichtung nach Anspruch 1, bei der die Lichtquelle ($12_m$) eine Membran ist, die an das Substrat (11) gehängt ist und sich oberhalb des Hohlraums ($11_c$) erstreckt.

3.  Vorrichtung nach einem der Ansprüche 1 oder 2, bei welcher der Abstand zwischen dem oberen Ende ($20_s$) der zweiten Komponente (20) und dem unteren Ende ($10_i$) der ersten Komponente (10) weniger als 5 mm beträgt.

4.  Vorrichtung nach einem der vorhergehenden Ansprüche, bei der:

- die Lichtquelle ($12_m$) sich senkrecht zu einer Querachse (Z) erstreckt;
- der Infrarotlichtsensor ($22_m$) sich senkrecht zu der Querachse erstreckt.

5.  Vorrichtung nach Anspruch 4, bei der die Lichtquelle und der Infrarotlichtsensor in Bezug auf die Querachse zentriert sind.

6.  Vorrichtung nach einem der vorhergehenden Ansprüche, bei der die Detektionsmembran parallel oder im Wesentlichen parallel zu der Ebene ist, entlang der sich die Lichtquelle erstreckt.

7.  Vorrichtung nach einem der vorhergehenden Ansprüche, die einen optischen Filter (24) umfasst, der an der Schnittstelle zwischen der ersten Komponente (10) und der zweiten Komponente (20) angeordnet ist, wobei der optische Filter ein Spektralband zur Detektion des Lichts begrenzt, das sich zum Infrarotlichtsensor hin ausbreitet.

8.  Vorrichtung nach einem der vorhergehenden Ansprüche, bei der sich eine Schicht aus Luft oder einem anderen Gas (26) zwischen der ersten Komponente (10) und der zweiten Komponente (20) erstreckt.

9.  Gasdetektor (40), der eine Kammer (42) umfasst, die geeignet ist, von einem zu analysierenden Gas eingenommen zu werden, wobei der Sensor umfasst:

- eine Lichtquelle, die dazu ausgestaltet ist, eine Infrarotstrahlung auszusenden, die sich durch die Kammer hindurch ausbreitet;
- einen Messfotodetektor (46), der dazu eingerichtet ist, ein Licht zu erfassen, das von der Lichtquelle ausgesendet wird und sich durch das in der Kammer vorhandene Gas hindurch ausgebreitet hat, wobei es durch Letzteres abgeschwächt wurde;
- einen Referenzfotodetektor, der dazu eingerichtet ist, ein Referenzlicht zu erfassen, das von der Lichtquelle ausgesendet wird und als durch das Gas nicht abgeschwächt betrachtet wird;
- wobei der Detektor **dadurch gekennzeichnet ist, dass** er eine Vorrichtung zur Aussendung und Kontrolle (1) nach einem der vorhergehenden Ansprüche umfasst, so dass:
- die Lichtquelle ($12_m$) der Vorrichtung zur Aussendung und Kontrolle (1) die Lichtquelle des Gasdetektors bildet;
- der Infrarotlichtsensor ($22_m$) der Vorrichtung zur Aussendung und Kontrolle (1) den Referenzfotodetektor des Gasdetektors bildet.

10. Gasdetektor nach Anspruch 9, bei dem die Vorrichtung zur Aussendung und Kontrolle und der Messfotodetektor auf einem selben Träger (47) angeordnet sind.

11. Gasdetektor nach Anspruch 10, bei dem der Träger (47) die Kammer (42) begrenzt.

12. Gasdetektor nach einem der Ansprüche 9 bis 11, bei dem:

- die Vorrichtung zur Aussendung und Kontrolle (1) einen optischen Filter, optischer Referenzfilter (24) genannt, umfasst, der zwischen der Lichtquelle und dem Infrarotlichtsensor angeordnet ist, so dass er ein Referenzspektralband ($\Delta\lambda_{ref}$) des von dem Referenzfotodetektor detektierten Lichts begrenzt;

- der Messfotodetektor einem optischen Messfilter zugeordnet ist, der ein Messspektralband $(\Delta\lambda_m)$ begrenzt.

13. Gasdetektor nach einem der Ansprüche 9 bis 12, der eine Verarbeitungseinheit (43) umfasst, die dazu ausgestaltet ist, ein von dem Messfotodetektor erzeugtes Messsignal und ein von dem Referenzfotodetektor erzeugtes Referenzsignal zu empfangen und eine Menge einer in dem Gas vorhandenen gasförmigen Spezies anhand des Messsignals und anhand des Referenzsignals zu bestimmen, wobei die gasförmige Spezies geeignet ist, das Licht in dem Messspektralband abzuschwächen.

14. Gasdetektor nach einem der Ansprüche 12 bis 13, bei dem das Referenzspektralband und das Messspektralband identisch sind oder sich überlappen.


**Claims**

1. Device (1) for emitting and controlling infrared light, comprising:

   - a substrate (11), extending between a bottom surface ($11_i$) and a top surface ($11_s$), a cavity ($11_c$) being formed in the substrate, the cavity opening onto the top surface;
   - a light source ($12_m$) extending over the cavity ($11_c$), able to heat up when passed through by an electric current, so as to emit infrared light;
   - a cover (13), covering the substrate, the cover and the substrate forming a first component (10) enclosing the light source ($12_m$), the first component extending between a bottom end ($10_i$) and a top end ($10_s$);
   - the light source ($12_m$) lying in a plane delineating a first half-space ($E_1$), comprising the cover and the top end ($10_s$) of the first component, and a second half-space ($E_2$), comprising the cavity ($11_c$) and the bottom end ($10_i$) of the first component;

   the device being such that it comprises:

   - an infrared-light sensor ($22_m$) confined in a second component (20), the second component extending between a bottom end ($20_i$) and a top end ($20_s$);

   the device being such that:

   - the second component (20) is securely fastened to the first component (10);
   - the top end ($20_s$) of the second component (20) is placed facing the bottom end ($10_i$) of the first component (10);

   such that the light source ($12_m$) is arranged to emit a first portion of the light into the first half-space ($E_1$), and through the cover, and a second portion of the light into the second space ($E_2$), and through the substrate (11), toward the infrared-light sensor ($22_m$), the latter being able to control an intensity of the light emitted by the light source;
   the device being **characterized in that**:

   - the infrared-light sensor comprises a detecting membrane ($22_m$), the infrared-light sensor forming a thermal radiation detector;
   - the detecting membrane lies in a cavity ($21_c$) that is placed under vacuum via removal of air, and that forms part of the second component.

2. Device according to Claim 1, wherein the light source ($12_m$) is a membrane that is suspended from the substrate (11), and that extends over the cavity ($11_c$).

3. Device according to either one of Claims 1 and 2, wherein the distance between the top end ($20_s$) of the second component (20) and the bottom end ($10_i$) of the first component (10) is smaller than 5 mm.

4. Device according to any one of the preceding claims, wherein:

   - the light source ($12_m$) lies perpendicular to a transverse axis (Z);
   - the infrared-light sensor ($22_m$) lies perpendicular to the transverse axis.

5. Device according to Claim 4, wherein the light source and the infrared-light sensor are centred with respect to the transverse axis.

6. Device according to any one of the preceding claims, wherein the detecting membrane is parallel or substantially parallel to the plane in which the light source lies.

7. Device according to any one of the preceding claims, comprising an optical filter (24) placed at the interface between the first component (10) and the second component (20), the optical filter defining a spectral band of detection of the light propagating toward the infrared-light sensor.

8. Device according to any one of the preceding claims, wherein a layer of air or of another gas (26) lies between the first component (10) and the second component (20).

9. Gas detector (40), comprising an enclosure (42) able to be occupied by a gas to be analysed, the sensor comprising:

- a light source, configured to emit infrared radiation that propagates through the enclosure;
- a measuring photodetector (46), arranged to capture light emitted by the light source, and having propagated through the gas present in the enclosure, and having been attenuated by said gas as it propagated therethrough;
- a reference photodetector, arranged to capture reference light emitted by the light source and considered not to be attenuated by the gas;
- the detector being **characterized in that** it comprises a device (1) for emitting and controlling according to any one of the preceding claims, such that:
- the light source ($12_m$) of the device (1) for emitting and controlling forms the light source of the gas detector;
- the infrared-light sensor ($22_m$) of the device (1) for emitting and controlling forms the reference photodetector of the gas detector.

10. Gas detector according to Claim 9, wherein the device for emitting and controlling and the measuring photodetector are placed on the same carrier (47).

11. Gas detector according to Claim 10, wherein the carrier (47) bounds the enclosure (42).

12. Gas detector according to any one of Claims 9 to 11, wherein:

- the device (1) for emitting and controlling comprises an optical filter, referred to as the reference optical filter (24), placed between the light source and the infrared-light sensor, so as to define a reference spectral band ($\Delta\lambda_{ref}$) of the light detected by the reference photodetector;
- the measuring photodetector is associated with a measurement optical filter, defining a measurement spectral band ($\Delta\lambda_m$).

13. Gas detector according to any one of Claims 9 to 12, comprising a processing unit (43), configured to receive a measurement signal generated by the measuring photodetector and a reference signal generated by the reference photodetector, and to determine an amount of a gas species present in the gas, on the basis of the measurement signal and on the basis of the reference signal, the gas species being able to attenuate the light in the measurement spectral band.

14. Gas detector according to either one of Claims 12 to 13, wherein the reference spectral band and the measurement spectral band are identical or overlap.

**Fig. 1A**

**Fig. 1B**

**Fig. 1C**

**Fig. 1D**

**Fig. 1E**

**Fig. 2**

**Fig. 3A**

**Fig. 3B**

**Fig. 3C**

**Fig. 3D**

**Fig. 4A**

**Fig. 4B**

## RÉFÉRENCES CITÉES DANS LA DESCRIPTION

**Documents brevets cités dans la description**

- US 5026992 A
- WO 2007064370 A
- WO 2016162848 A
- WO 2018229239 A
- US 2003041649 A1
- EP 3462149 A1
- EP 2846201 A

**Littérature non-brevet citée dans la description**

- Simulation et conception de microsources infrarouges nanophotoniques pour la détection de gaz. **LEFEBVRE A.** thèse de doctorat. l'université Paris Saclay, 16 Décembre 2015